# FASCICULE DE BREVET EUROPEEN

(11) **EP 0 919 838 B1**
(45) Date de publication et mention de la délivrance du brevet: **28.08.2002**
(21) Numéro de dépôt: 98402933.0
(22) Date de dépôt: 24.11.1998
(51) Int. Cl.: G01V 3/10

(54) **Détecteur de proximité inductif configurable**
Konfigurierbarer induktiver Näherungsdetektor
Configurable inductive proximity-detector

(30) Priorité: 28.11.1997 FR 9715132
(43) Date de publication de la demande: 02.06.1999
(73) Titulaire: Schneider Electric Industries SAS, 92500 Rueil-Malmaison (FR)
(72) Inventeur: Guichard, Christophe, 16000 Angouleme (FR)

(56) Documents cités:
- EP-A- 0 678 759
- FR-A- 2 716 979

## Description

La présente invention concerne un détecteur de proximité inductif configurable de manière à détecter sélectivement des objets métalliques ferreux ou non ferreux.

Il existe de nombreux détecteurs inductifs comprenant :
- une bobine faisant partie d'un circuit oscillant LC qui engendre une oscillation et dont l'inductance est sensible à la présence d'un objet métallique, de manière que la fréquence propre du circuit oscillant varie à l'approche d'un tel objet,
- un oscillateur engendrant une oscillation fixe, indépendante de la présence de l'objet, qui force le circuit oscillant via des moyens de couplage, ainsi qu'
- un circuit de traitement qui reçoit en entrée d'une part le signal d'oscillation fixe provenant de l'oscillateur et d'autre part le signal d'oscillation variable provenant du circuit oscillant et qui émet en sortie un signal de détection en présence de l'objet.

Un tel détecteur, apte à détecter sélectivement des objets métalliques ferreux et non ferreux, est décrit dans le brevet FR-2 716 979. Il apparaît souhaitable de pouvoir détecter des objets ferreux et non ferreux au moyen de détecteurs de ce type appartenant à une gamme simplifiée et homogène et de pouvoir facilement configurer ces détecteurs sur le lieu de fabrication, voire sur le lieu d'utilisation, selon la nature des métaux à détecter.

L'invention a pour but de permettre de configurer de manière simple des détecteurs de proximité inductifs pour les affecter à la détection de métaux ferreux ou non ferreux.

Selon l'invention, dans un détecteur de proximité inductif du type précédemment décrit, la fréquence f de l'oscillation engendrée par l'oscillateur est inférieure à la fréquence critique fc du circuit oscillant ; le circuit de traitement comprend un détecteur de phase muni d'une première entrée et d'une deuxième entrée auxquelles sont applicables respectivement le signal d'oscillation fixe et le signal d'oscillation variable ou vice versa au moyen d'un organe inverseur de configuration.

On peut ainsi configurer en mode ferreux ou non ferreux le détecteur de proximité par un organe inverseur à commande mécanique ou électronique ; la simplicité de cette configuration provient d'une part du fait que la fréquence invariable fournie par l'oscillateur est très inférieure à la fréquence critique du circuit oscillant, et que le sens de variation de l'inductance est donc nettement différencié suivant que l'objet est ferreux ou non ferreux ; d'autre part du fait que la simple permutation des signaux à l'entrée du détecteur de phase est très facile à réaliser.

L'organe inverseur de configuration autorise en outre aisément une configuration de la sortie du détecteur en sortie normalement ouverte ou normalement fermée.

La description est faite ci-après d'un mode de réalisation non limitatif de l'invention, en regard du dessin annexé.

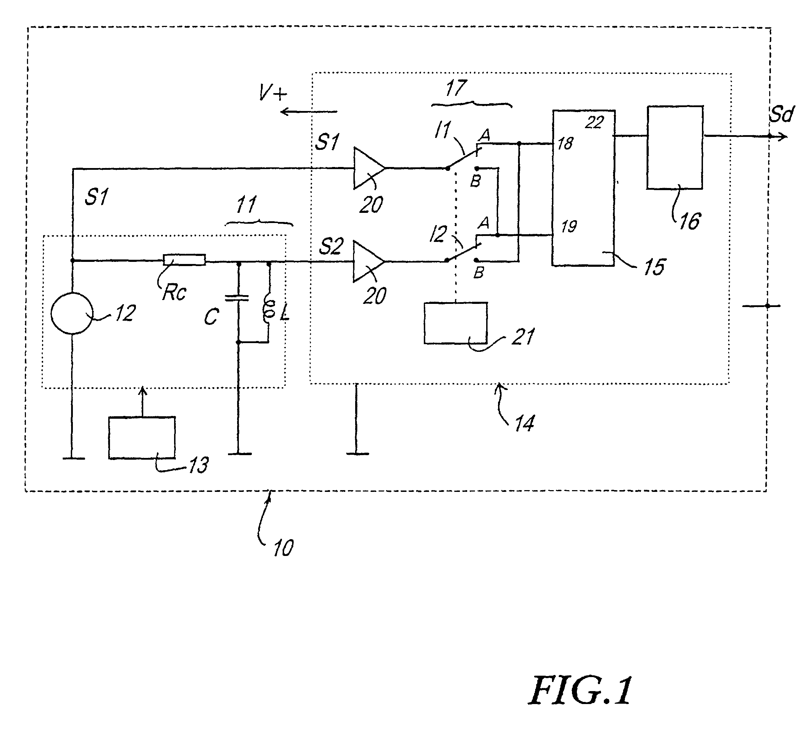

La figure 1 représente le schéma synoptique d'un détecteur de proximité conforme à l'invention.

Le détecteur de proximité 10 comporte un circuit oscillant 11 composé d'une capacité C en parallèle à une inductance L qui forme la bobine détectrice. Au circuit oscillant 11 est couplé via une résistance Rc un oscillateur 12 engendrant un signal oscillant S1 dont l'amplitude et la fréquence restent invariables quand un objet métallique s'approche du détecteur. L'inductance L est au contraire variable quand un objet métallique s'approche du détecteur, de sorte que le circuit oscillant 11, forcé par l'oscillateur 12, délivre un signal oscillant S2 susceptible de varier.

L'oscillateur 12 est un oscillateur à quartz ; il peut aussi comprendre un circuit oscillant LC insensible à l'approche d'un objet métallique, ou plus généralement un circuit présentant une telle insensibilité et agissant en référence de phase.

L'oscillateur 12 est alimenté par une tension V+ engendrée à partir d'une source de tension externe au détecteur et il excite le circuit oscillant 11 avec une oscillation de fréquence f sensiblement inférieure à la fréquence critique fc du circuit oscillant. Cette fréquence critique est définie comme étant celle à laquelle l'inductance du circuit oscillant reste pratiquement constante quand on approche un objet ferreux du détecteur. L'oscillation du circuit oscillant 11 étant forcée par celle de l'oscillateur 12, il en résulte que l'approche d'un objet métallique se traduit par une variation de phase de S2 par rapport à S1. Du fait que la fréquence f est très inférieure à la fréquence fc, l'inductance L augmente et à l'approche d'un objet ferreux et diminue à l'approche d'un objet non ferreux.

Des moyens d'étalonnage 13 sont associés à l'oscillateur et/ou au circuit oscillant de façon à régler la phase entre les signaux S1 et S2.

Le détecteur de proximité 10 exploite la variation d'inductance du circuit oscillant 11 et la variation de phase résultante. Il comprend un circuit de traitement 14 agencé pour délivrer un signal de détection Sd commutable d'un premier état à un deuxième état quand la distance de l'objet métallique franchit un seuil dit portée de détection. Si le premier état est bas et le deuxième état haut, le détecteur est désigné comme étant du type à sortie normalement ouverte (NO), et dans le cas inverse il est du type à sortie normalement fermée (NC).

Le circuit 14 comporte un détecteur de phase 15, un étage de sortie 16 qui délivre le signal Sd et un organe inverseur 17. Le détecteur de phase 15 présente deux entrées 18,19 auxquelles sont applicables via des organes de mise en forme 20 le signal S1 et le signal S2, ou vice-versa, au moyen de I' organe inverseur 17 ; celui-ci comprend à cet effet deux interrupteurs-inverseurs I1,I2 reliés d'une part à la source de signal respective S1 ou S2 et d'autre part à l'une ou l'autre des deux entrées 18,19 et mis en oeuvre par un élément d'inversion 21 mécanique, par exemple à cavaliers ou shunts, ou électronique, par exemple à transistors. Le détecteur de phase 15, par exemple du type à bascule D ou de tout autre type approprié, présente une sortie 22 reliée à l'étage de sortie 16, dont le signal Sd commute en fonction du signal présent à la sortie 22. On peut réaliser un circuit de traitement comprenant deux détections de phase afin de disposer de deux signaux de sortie, dont l'un est significatif de la présence d'un objet ferreux et l'autre d'un objet non ferreux et inversement.

Le détecteur de proximité décrit fonctionne de la manière suivante.

On suppose que l'organe inverseur est en position A, de sorte que le signal d'oscillation fixe S1 et le signal d'oscillation variable S2 sont appliqués respectivement à l'entrée 18 et à l'entrée 19 du détecteur de phase 15.

Si l'étalonnage du détecteur a déterminé une configuration apte à détecter des objets ferreux avec une sortie NO, à l'approche d'un objet ferreux, et quand la distance de celui-ci devient inférieure à la portée étalonnée, le déphasage initialement nul entre S1 et S2 atteint le seuil de détection du détecteur de phase 15 et le signal Sd délivré par le circuit de traitement 14 passe à l'état haut (ON).

Si l'étalonnage du détecteur a déterminé une configuration apte à détecter des objets non ferreux avec une sortie NC, le signal Sd passe à l'état bas (OFF) quand la distance de l'objet devient inférieure à la portée étalonnée, le déphasage variant dans le sens inverse du précédent.
On suppose maintenant que l'organe inverseur est en position B, de sorte que le signal d'oscillation fixe S1 et le signal d'oscillation variable S2 sont appliqués respectivement à l'entrée 19 et à l'entrée 18 du détecteur de phase 15.

Si l'étalonnage du détecteur a déterminé une configuration apte à détecter des objets ferreux avec une sortie NC, le signal Sd passe à l'état bas (OFF) quand la distance de l'objet devient inférieure à la portée étalonnée.

Enfin, si l'étalonnage du détecteur a déterminé une configuration apte à détecter des objets non ferreux avec une sortie NO, le signal Sd passe à l'état haut (ON) quand la distance de l'objet devient inférieure à la portée étalonnée.

La sélectivité entre familles de métaux ferreux et non ferreux obtenue avec le détecteur de l'invention est très nette, puisque l'inductance, et l'écart de phase qui en découle, varient en sens opposés selon que l'objet cible est ferreux ou non ferreux.

Les moyens d'étalonnage 13 peuvent être du type décrit dans le document EP-678 759 afin de modifier la fréquence propre du circuit oscillant 11. Ils peuvent aussi être constitués par tout moyens, notamment de réglage de la fréquence de l'oscillateur pilote 12 ou de réglage de l'inductance L, permettant de faire varier la phase entre les signaux S1 et S2.

## Revendications

1. Détecteur de proximité inductif configurable de manière à détecter sélectivement des objets métalliques ferreux ou non ferreux, comprenant :
- une bobine faisant partie d'un circuit oscillant (L,C) adapté à engendrer une oscillation et dont l'inductance (L) est sensible à la présence d'un objet métallique de manière que la fréquence propre de l'oscillation varie à l'approche d'un tel objet,
- un oscillateur (12) adapté à engendrer une oscillation fixe, indépendante de la présence de l'objet, pour exciter le circuit oscillant via des moyens de couplage (RC) et des moyens d'accord (13),
- un circuit de traitement (14) adapté à recevoir en entrée d'une part le signal d'oscillation fixe (S1) provenant de l'oscillateur et d'autre part le signal d'oscillation variable (S2) provenant du circuit oscillant et à émettre en sortie un signal de détection (Sd) en présence de l'objet,
- la fréquence (f) de l'oscillation engendrée par l'oscillateur (12) est inférieure à la fréquence critique (fc) du circuit oscillant,
***caractérisé par le fait que**:*
- le circuit de traitement (14) comprend un détecteur de phase (15) muni d'une première entrée (18) et d'une deuxième entrée (19) auxquelles sont applicables de façon permutable le signal d'oscillation fixe (S1) et le signal d'oscillation variable (S2) ou vice versa au moyen d'un organe inverseur de configuration (17).

2. Détecteur de proximité selon la revendication 1, ***caractérisé par le fait qu'*** il est adapté à émettre le signal de détection (Sd) à deux états, les moyens d'accord (13) étant étalonnés de manière que :
- dans un premier état de l'organe inverseur (17), le détecteur est adapté à fonctionner en mode normalement ouvert (NO) à l'approche d'un objet ferreux et en mode normalement fermé (NC) à l'approche d'un objet non ferreux,
- dans un deuxième état de l'organe inverseur (17), le détecteur est adapté à fonctionner en mode normalement fermé (NC) à l'approche d'un objet ferreux et en mode normalement ouvert (NO) à l'approche d'un objet non ferreux.

3. Détecteur de proximité selon la revendication 1, ***caractérisé par le fait que*** l'organe inverseur (17) est à commande mécanique.

4. Détecteur de proximité selon la revendication 1, ***caractérisé par le fait que*** l'organe inverseur (17) est à commande électronique.

## Patentansprüche

1. Induktiver Näherungsschalter, der konfiguriert werden kann, um selektiv eisenhaltige oder nicht eisenhaltige metallische Gegenstände zu erfassen, umfassend:
- eine Spule, die zu einem Schwingkreis (L, C) gehört, der eine Schwingung erzeugen kann, und deren Induktivität (L) auf das Vorhandensein eines metallischen Gegenstandes anspricht, so dass sich die dem Schwingkreis eigene Frequenz ändert, wenn sich ein derartiger Gegenstand nähert,
- einen Oszillator (12), der eine feststehende, von dem Vorhandensein des Gegenstandes unabhängige Schwingung erzeugen kann, um den Schwingkreis über Kopplermittel (RC) und Abstimmungsmittel (13) zu erregen,
- eine Bearbeitungsschaltung (14), die eingangs einerseits das von dem Oszillator kommende feststehende Schwingungssignal (S1) und andererseits das von dem Schwingkreis kommende veränderliche Schwingungssignal (S2) empfangen und ausgangs bei Vorhandensein des Gegenstandes ein Erfassungssignal (Sd) aussenden kann.
- die von dem Oszillator (12) erzeugte Schwingungsfrequenz (f) kleiner ist als die kritische Frequenz (fc) des Schwingkreises,
**dadurch gekennzeichnet, dass**
die Bearbeitungsschaltung (14) einen Phasendetektor (15) umfasst, der mit einem ersten Eingang (18) und einem zweiten Eingang (19) versehen ist, an die das feststehende Schwingungssignal (S1) und das veränderliche Schwingungssignal (S2) oder umgekehrt mittels eines Konfigurationsumschaltelements (17) austauschbar angelegt werden können.

2. Näherungsschalter nach Anspruch 1, **dadurch gekennzeichnet, dass** er das Erfassungssignal (Sd) mit zwei Zuständen aussenden kann, wobei die Abstimmungsmittel (13) so kalibriert sind, dass:
- in einem ersten Zustand des Umschaltelements (17) der Detektor in einer normalerweise offenen Betriebsart (NO) funktionieren kann, wenn sich ein eisenhaltiger Gegenstand nähert, und in einer normalerweise geschlossenen Betriebsart (NC), wenn sich ein nicht eisenhaltiger Gegenstand nähert,
- in einem zweiten Zustand des Umschaltelements (17) der Detektor in einer normalerweise geschlossenen Betriebsart (NC) funktionieren kann, wenn sich ein eisenhaltiger Gegenstand nähert, und in einer normalerweise offenen Betriebsart (NO), wenn sich ein nicht eisenhaltiger Gegenstand nähert.

3. Näherungsschalter nach Anspruch 1, **dadurch gekennzeichnet, dass** das Umschaltelement (17) mechanisch gesteuert wird.

4. Näherungsschalter nach Anspruch 1, **dadurch gekennzeichnet, dass** das Umschaltelement (17) elektronisch gesteuert wird.

## Claims

1. Configurable inductive proximity detector that can be configured to selectively detect ferrous or nonferrous objects, comprising:
- a coil forming part of an oscillating circuit (L, C) adapted to generate an oscillation and the inductance (L) of which is sensitive to the presence of a metal object, such that the natural frequency of the oscillation varies as this type of object is brought close,
- an oscillator (12)adapted to generate a fixed oscillation independent of whether or not the object is present, to excite the oscillating circuit through coupling (RC) and matching means (13),
- a processing circuit (14) adapted to receive input, firstly the fixed oscillation signal (S1) output from the oscillator, and secondly the variable oscillation signal (S2) output from the oscillating circuit and to emit output a detection signal (Sd) in the presence of the object.
- the frequency (f) of the oscillation generated by the oscillator (12) is below the critical frequency (fc) of the oscillating circuit,
***characterized by** the fact that*
- the processing circuit (14) comprises a phase detector (15) equipped with a first input (18) and a second input (19) to which the fixed oscillation signal (S1) and the variable oscillation signal (S2) can be applied, or vice versa using a configuration inverter device (17).

2. Proximity detector according to claim 1, ***characterized by** the fact that,* if it can emit, the detection signal (Sd) may be in one of two states, the matching means (13) being calibrated such that:
- in a first state of the inverter device (17), the detector is adapted to operate in normally open (NO) mode when a ferrous object is brought close, and in normally closed mode (NC) when a nonferrous object is brought close,
- in a second state of the inverter switch (17), the detector is adapted to operate in normally closed (NC) mode when a ferrous object is brought close, and in normally open mode (NO) when a nonferrous object is brought close.

3. Proximity detector according to claim 1, ***characterized by** the fact that* the inverter device (17) is mechanically controlled.

4. Proximity detector according to claim 1, ***characterized by** the fact that* the inverter device (17) is electronically controlled.
